# EUROPÄISCHE PATENTSCHRIFT

(11) **EP 1 410 976 B1**
(45) Veröffentlichungstag und Bekanntmachung des Hinweises auf die Patenterteilung: **09.01.2008**
(21) Anmeldenummer: 02102462.5
(22) Anmeldetag: 17.10.2002
(51) Int. Cl.: B62D 21/02, B62D 29/00

(54) **Profilträger**
Structural member
Poutre profilée

(43) Veröffentlichungstag der Anmeldung: 21.04.2004
(73) Patentinhaber: Ford Global Technologies, LLC, Dearborn, MI 48126 (US)
(72) Erfinder: Lanzerath, Horst Heribert, 53902, Bad Muenstereifel (DE)
(74) Vertreter: Drömer, Hans-Carsten

(56) Entgegenhaltungen:
- EP-A- 0 844 167
- WO-A-01/41950
- WO-A-97/43501
- DE-A- 19 858 903
- US-A- 5 575 526

## Beschreibung

Die Erfindung betrifft einen Profilträger, insbesondere für Karosserien von Kraftfahrzeugen, gemäß dem Oberbegriff des Anspruches 1.

Ein solcher Profilträger ist aus der gattungsgemäßen EP 0844167 und der US 5575526 bekannt. Der Hohlraum zwischen dem innenliegenden Strukturbauteil und der Außenschale braucht nur mit einer geringen Menge Strukturschaum ausgeschäumt zu werden. Trotzdem ergibt sich ein sehr steifes und leichtes Bauteil, da alles tragende Material im Außenbereich des Profilträgers angeordnet ist und der nichtragende Innenbereich nicht unnötig mit Schaum ausgefüllt wird. Das innere Strukturteil kann demnach sehr einfach geformt sein: Es muß sich nur im wesentlichen in Längsrichtung des Profilträgers erstrecken, während der Querschnitt abhängig vom Fertigungsaufwand gewählt werden kann. In der EP 0844167 ist beschrieben, wie ein solches Strukturteil hergestellt sein kann, beispielsweise als abgekantetes Profilblech, als Massivkörper oder als Hohlprofil. Keines dieser Ausführungen ist jedoch geeignet, um mit geringem Aufwand gefertigt zu werden und gleichzeitig eine hohe Steifigkeit des Profilträgers zu gewährleisten.

Aufgabe der Erfindung ist es deshalb, das innenliegende Strukturbauteil so zu gestalten, daß es mit geringstem Fertigungsaufwand hergestellt wird bei gleichzeitig hoher Steifigkeit des gesamten Profilträgers.

Gelöst wird diese Aufgabe mit den Merkmalen des Anspruchs 1.

Indem das aus mindestens einem Profilblech gebildete Strukturbauteil zumindest bereichsweise überlappende Blechflächen aufweist, die nicht durch strukturelle Fügungen verbunden sind, kann auf einfache Weise ein Hohlprofile erstellt werden, welches einfach durch Falten, Biegen und/oder Zusammenstecken mehrerer Profilbleche entsteht. Indem nur einfache Blechumformoperationen und keine aufwendigen Fügeoperationen durchgeführt werden, kann auf einfache Weise das Strukturbauteil hergestellt werden. Im nicht montierten Zustand weist dieses Strukturbauteil nur eine geringe Steifigkeit auf, da die überlappenden Bereiche nicht gefügt sind. Wenn aber das Strukturteil im Innenraum des Profilträgers eingelegt ist und der zwischen Außenschale und Strukturteil verbleibende Hohlraum mit dem Strukturschaum ausgeschäumt wird, wird das Strukturteil festigkeitsmäßig mit der Außenschale verbunden, so daß der Profilträger insgesamt eine sehr steife Einheit bildet. Der Nachteil, daß die Profilbleche des Strukturbauteil zwar überlappen, aber dort nicht strukturell verbunden sind, wird durch das Ausschäumen fast vollständig kompensiert. Der Strukturschaum übernimmt neben der Stützung der Außenschale auch die Funktion eines Klebers zur Verklebung der Profilbleche des Strukturteiles mit sich selbst.

Als Strukturschaum kann jeder Metallschaum, jeder Kunststoffschaum oder sonstiger geeignete Schaum Verwendung finden, der in einem besonderen Verfahrensschritt zum Aufschäumen gebracht werden kann und der beim Aushärten eine feste Verbindung mit den Teilen des Profilträgers herstellt. Unter struktureller Verbindung ist eine festigkeitsmäßige Fügung zu verstehen, die eine Kraft in der Größenordnung des ungestörten Grundmaterials übertragen kann, wie Schweißen, Kleben, Nieten. Schrauben, Clinchen, Durchsetzfügen usw. Alle diese Fügeverfahren sind zwar effektiv, jedoch teuer in der Anwendung und werden hier, bei der erfindungsgemäßen Ausführung des Strukturbauteiles, nicht benötigt. Wenn hier die Rede von Blechen ist, so ist jedes Material gemeint, woraus ein Profil geformt werden kann, welches eine geringe Dicke in Relation zu seiner Breite und Länge aufweist. Typische Materialien für Profile sind z.B. Stahl, Aluminium, Faserverbundwerkstoffe. Die Außenschale und/oder das Strukturteil können einstückig sein oder sich auch aus mehreren Teilen zusammensetzen, wobei auch hier unterschiedliche Materialen in beliebiger Kombination eingesetzt werden können.

Besteht das Strukturbauteil nur aus einem Profilblech, bildet der Profilblechquerschnitt im Bereich der Überlappung eine Hohlprofil. An den Enden überlappt sich das Profilblech zwar, ist jedoch im strukturellen Sinne, da keine strukturelle Verbindung erfolgte, als Hohlprofil nicht geschlossen. Durch die Überlappung ist gewährleistet, daß beim Ausschäumen des Profilträgers der Strukturschaum überwiegend im Hohlraum zwischen Außenschale und Strukturteil verbleibt und nicht durch den offenen Schlitz an der Überlappung im Hohlprofil in dessen Innenraum gelangt. Weiterhin kann, bei geeigneter Gestaltung der Überlappung, die Verklebung der beiden an der Überlappung beteiligten Blechbereiche bewerkstelligt werden, indem ein Teil des Strukturschaums während des Ausschäumens in die Überlappung eintritt und dann beim Aushärtender die beiden Blechbereiche verklebt. Dadurch entsteht beim Ausschäumen, strukturell gesehen, aus dem vormals offenen Hohlprofil ein geschlossenes Hohlprofil, mit allen Vorteilen für die Steifigkeit und die Festigkeit des gesamten Profilträgers.

Wird das Strukturbauteil aus mehreren Profilblechen zusammengesetzt, so können die zwei Profilbleche entweder die Überlappung in Längsrichtung oder im Querschnitt aufweisen. Überlappung in Längsrichtung bedeutet, daß die beiden Profilbleche z. B. Flansche aufweisen, die aufeinanderliegen, oder die beiden Profilblech können jeweils eine U-förmigen Querschnitt aufweisen und ineinandergesteckt sein. Überlappen in Querrichtung bedeutet, daß die beiden Profilbleche als beliebiges offenes Profil, als offenes Hohlprofil, oder als geschlossenes Hohlprofil ausgebildet sein können und am Querschnitt entweder Flansche aufweisen, die aufeinanderliegen, oder die Profile sind einfach ineinandergesteckt, z. B. zwei ineinandergesteckte Rohre. Auch hier sind die einzelnen Profilbleche bzw. die daraus erstellten Profile nicht strukturell miteinander gefügt, sondern die feste Verbindung sowohl mit der Außenschale als auch der Profilbleche untereinander entsteht erst durch das Ausschäumen des Profilträgers.

Vorteilhaft weist zumindest ein Profilblech mindestens eine Lasche auf, die das Strukturbauteil während der Montage des Profilträgers in Form halten. Diese Lasche kann so ausgeformt sein, daß sie das Strukturbauteil in der Außenschale positioniert, damit das Strukturbauteil beim Ausschäumen seine Lage relativ zur Außenschale nicht verändert. Vorteilhaft weist das Strukturbauteil mehrere Laschen auf, so daß die räumlich Fixierung in der Außenschale sichergestellt ist. Weitere Laschen können auch dazu dienen, in der Art einer Schnappverbindung die einzelnen Profilbleche des Strukturteiles in Form zu halten, solange der Profilträger noch nicht ausgeschäumt ist. Besonders vorteilhaft weist dazu das einer Lasche gegenüberliegende Profilblech bzw. Blechbereich einen Schlitz auf, durch den die Lasche geführt ist. Dadurch ergibt sich bereits automatisch ein Halt, der noch durch nachträgliches Umbiegen erhöht werden kann. Hier liegt jedoch keine strukturelle Fügung vor, sondern nur ein behelfsmäßiges Heften. Die kraftübertragende Verbindung entsteht erst wieder nach dem Ausschäumen, wenn der Strukturschaum ausgehärtet ist.

Die Erfindung kann im Fahrzeugbau bei allen lastaufnehmenden Komponenten von z. B. Karosserien und Fahrwerk eingesetzt werden, wie Längs- und Querträgern, Dachsäulen und Achsträgern. Allgemein ist der erfindungsgemäße Profilträger überall einsetzbar, wo Kräfte durch Strukturbauteile aufgenommen werden müssen, z. B. in der Luftfahrt, Raumfahrt, Schiffbau, im allgemeinen Maschinenbau und in Bauwerken.

Es sei an dieser Stelle darauf hingewiesen, daß das Strukturbauteil auch strukturelle Fügungen enthalten kann, z. B. wenn zwei Rohrprofile ineinander gesteckt sind. Ein oder beide Rohre könnten dann selbst durch Schweißen als Rohr aus einem Blech hergestellt worden sein.

Weitere vorteilhafte Ausgestaltungen der Erfindung sind den Zeichnungen zu entnehmen. Es zeigen:
- Fig. 1: eine perspektivische Ansicht eines erfindungsgemäßen Profilträgers;
- Fig. 2: einen Querschnitte durch einen weiteren Profilträger;
- Fig.3a,b: eine schematische Ansicht der Heftung mittels Laschen eines zweiteiligen Strukturbauteiles; und

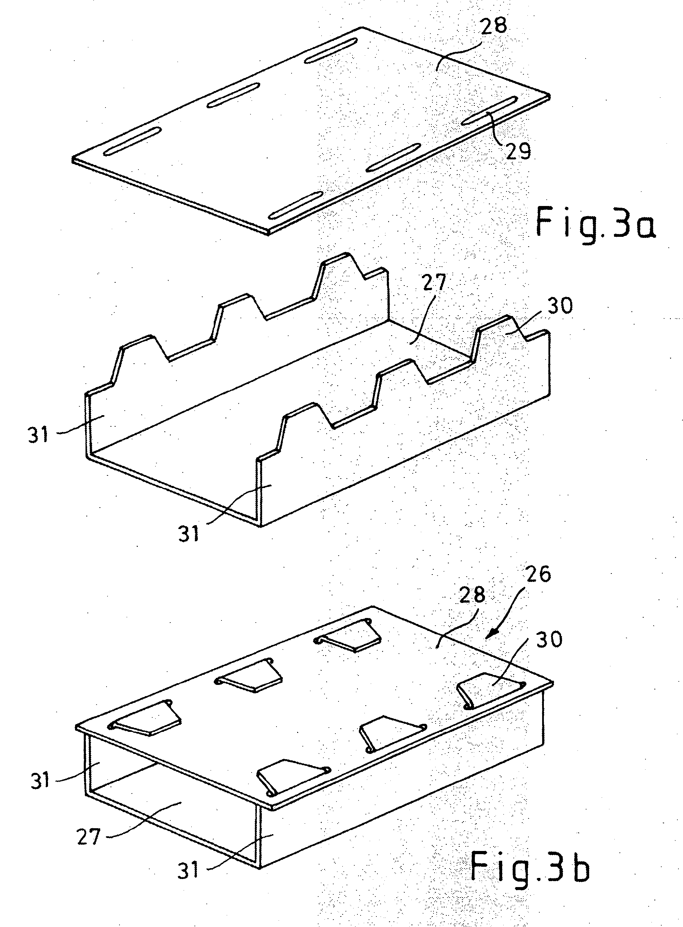

- Fig. 3a,b,c Fig. 3a,b: eine schematische Ansicht der Heftung mittels Lasche eines einteiligen Strukturbauteiles.

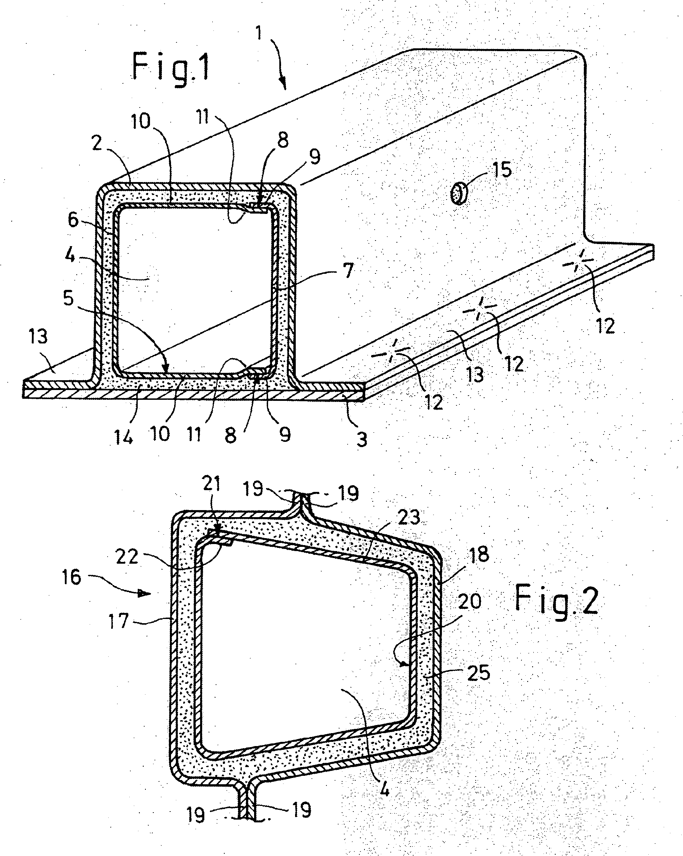

In Fig. 1 ist ein Profilträger 1 dargestellt, der eine zweiteilige Außenschale aufweist, bestehend aus dem Oberschale 2 und einer Unterschale 3. Im Innenraum 4 des Profilträgers 1 befindet sich ein in Längsrichtung erstreckendes Strukturbauteil 5, bestehen aus U-förmigen Profilblech 6 und einem deckelförmigen Profilblech 7. Das Strukturbauteil 5 weist zwei sich in Längsrichtung erstreckende Überlappungen 8 auf, die dadurch gebildet sind, das zwei vom Profilblech 7 abstehenden Längsflansche 9 auf das Profilblech 6 geschoben sind. Die beiden Seitenwände 10 des Profilblechs 6 weisen jeweils einen längslaufenden Absatz 11 auf, wodurch die Längsflansche 9 und damit das Profilblech 7 relativ zum Profilblech 6 positioniert sind. Bevor das Strukturbauteil 5 in den Innenraum 4 verbracht wird, sind die beiden Profilbleche 6 und 7 nur ineinandergesteckt und halten allein aufgrund der Klemmkräfte zwischen den Längsflanschen 9 und den Seitenwänden 10 zusammen.

Bei der Fertigung des Profilträgers 1 wird das zusammengesteckte Strukturbauteil 5 in der Oberschale 2 positioniert. Dies kann durch geeignete Abstandshalter, durch abstehende Blechlaschen an den Profilblechen 6 und 7, durch Eindrückungen in den Profilblechen 6 und 7 und/oder der Außenschale, durch eingebrachten, nicht aufgeschäumten Strukturschaum, oder durch jede andere, aus dem Stand der Technik bekannten Maßnahme erfolgen. Nachdem das Strukturbauteil 5 in der Oberschale 2 positioniert ist, wird der Profilträger 1 geschlossen, indem die Unterschale 3 mit der Oberschale 2 strukturell gefügt wird, hier mittels der Punktschweißungen 12 auf den Längsflanschen 13. Sodann wird der Strukturschaum 14 in den Hohlraum zwischen Außenschale und Strukturbauteil 5 eingebracht. Dies kann erfolgen, indem ein vorher nicht-aufgeschäumter Strukturschaum z.B. in die Oberschale 2 gelegt wird, und nach dem Schließen des Trägers z.B. durch eine thermische Reaktion der Strukturschaum 13 aufschäumt und sich im Hohlraum gleichmäßig verteilt. Der Strukturschaum kann aber auch in dafür vorgesehen Öffnungen 15 im Profilträger 1 in den Hohlraum eingespritzt werden und schäumt dann auf.

Nach dem Aushärten des Strukturschaums 14 ist das Strukturbauteil 5 fest mit der Außenschale verbunden. Durch diese feste Verbindung weist der erfindungsgemäße Profilträger 1 fast die gleichen mechanischen Kennwerte für Steifigkeiten und Festigkeiten auf als wenn die beiden Profilbleche 6 und 7 des Strukturbauteils 5 bereits vorher strukturell gefügt worden wären.

Figur 2 zeigt einen weiteren Profilträger 16 wie er typischerweise im Fahrzeugbau z. B. für einen Längsträger, einen Schweller, oder für eine Dachsäule verwendet wird. Die zweiteilige Außenschale besteht aus einer inneren Seitenschale 17 und einer äußeren Seitenschale 18, die beide an den Längsflanschen 19 mittels geeigneter Fügungen verbunden sind. Das Strukturbauteil 20 besteht aus nur einem Profilblech, das durch mehrmaliges Abkanten entstanden ist, wobei sich die Überlappung 21 dadurch ergibt, daß der abstehende Flansch 22 sich an die Seitenwand 23 anlegt. Auch hier wird das Strukturbauteil 20 nur durch Biegen hergestellt, stellt als vor der Montage im Profilträger 16 ein offenes Hohlprofil dar. Die Steifigkeit des Profilträgers 16 wird wieder erreicht, indem der Hohlraum zwischen Außenschale 17, 18 und dem Strukturbauteil 20 mit Strukturschaum 25 ausgeschäumt wird.

Figur 3a und 3b zeigen die Herstellung eines Strukturbauteiles 26 aus zwei Profilblechen, dem Profilblech 27 und dem Deckblech 28. Dabei weist das Deckblech 28 Schlitze 29 auf, die mit Laschen 30 am Profilblech 27 korrespondieren. Bei der Montage des Strukturbauteiles wird das Deckblech 28 mit dem Profilblech 27 verbunden, indem die Laschen 30 durch die Schlitze 29 gesteckt werden. Sobald das Deckblech 28 auf den Seitenwänden 31 des Profilbleches 27 aufliegt, werden die Laschen 30 umgebogen, so daß das Strukturbauteil behelfsmäßig geheftet ist. Diese Laschenverbindung kann jedoch keine nennenswerte Kräfte übertragen, zumindest nicht ohne daß das gesamte Strukturbauteil nicht größere Verformungen erfährt, was aber einer geringen Steifigkeit entspräche. Auch hier ergibt sich der Steifigkeitsgewinn für eine Profilträger durch das Strukturbauteil 26 erst, wenn es in einem Profilträger mittels Strukturschaum eingeschäumt wird.

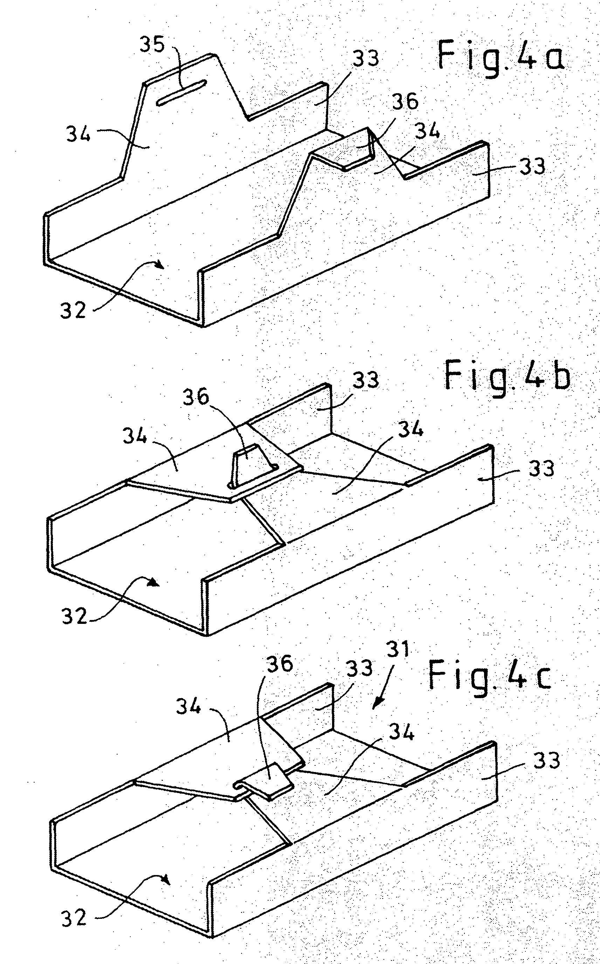

Ein weiteres Verfahren zur Herstellung eines Strukturbauteiles 31 ist in den Figuren 4a bis 4c dargestellt. Ein Profilblech 32 weist an jeder seiner beiden Seitenwände 33 einen Biegeflansch 34 auf, wobei einer einen Schlitz 35 und einer einen hochstehenden Flansch 36 aufweist. Werden die beiden Biegeflansche 34 die endgültige Lage gebogen, wird der Flansch 36 durch den Schlitz 35 geführt und dann zur behelfsmäßigen Heftung flach umgebogen. Damit ensteht ein Hohlprofil, daß jedoch nicht geschlossen ist, da die Heftung zu nachgiebig ist. Erst wenn das Strukturteil 31 in einem Profilträger mittels Strukturschaum verklebt ist, entfaltet es wieder die vorteilhafte Steifigkeitswirkung. Natürlich beschränkt sich diese mögliche Ausführung nicht auf die hier gezeigte eine Lasche. Es können auch mehrere Laschen hintereinander über die gesamte Länge des Strukturbauteils vorhanden sein.

## Patentansprüche

1. Profilträger (1,16), insbesondere für Karosserien von Kraftfahrzeugen, mit einer einen Innenraum (4) umgrenzenden Außenschale (2,3,17,18), und mit einem im Innenraum (4) angeordneten, sich im wesentlichen in Längsrichtung erstreckenden Strukturbauteil (5,20), wobei zwischen der Innenwand der Außenschale (2,3,17,18) und dem Strukturbauteil (5,20) ein Hohlraum gebildet ist, der zumindest teilweise mit einem aufgeschäumten Strukturschaum (13,25) ausgefüllt ist,
**dadurch gekennzeichnet, daß**
das aus mindestens einem Profilblech (6,7,20,27,28,32) gebildete Strukturbauteil (5,20,26,31)) zumindest bereichsweise überlappende Blechflächen (8,21) aufweist, die nicht durch strukturelle Fügungen verbunden sind.

2. Profilträger nach Anspruch 1,
**dadurch gekennzeichnet, daß**
das Strukturbauteil (20,31) aus einem Profilblech (32) besteht, wobei das Profilblech im Bereich der Überlappung (21) als Hohlprofil geformt ist.

3. Profilträger nach Anspruch 1,
**dadurch gekennzeichnet, daß**
das Strukturbauteil (1,26) gebildet ist durch mindestens zwei Profilbleche (6,727,28), die zumindest eine bereichsweise Überlappung (8) in Längsrichtung aufweisen.

4. Profilträger nach einem der vorherigen Ansprüche,
**dadurch gekennzeichnet, daß**
das Strukturbauteil gebildet ist durch mindestens zwei Profilbleche, die zumindest eine bereichsweise Überlappung im Querschnitt aufweisen.

5. Profilträger nach einem der vorherigen Ansprüche,
**dadurch gekennzeichnet, daß**
zumindest ein Profilblech (27,32) mindestens eine Lasche (30,36) aufweist, die das Strukturbauteil (26,31) während der Montage eines Profilträgers in Form halten.

6. Profilträger nach Anspruch 5,
**dadurch gekennzeichnet, daß**
zumindest eine Lasche (30,36) durch einen Schlitz (29,25) eines Profilbleches (27,32) geführt ist.

7. Profilträger nach Anspruch 5 oder 6,
**dadurch gekennzeichnet, daß**
zumindest eine Lasche (30,36) umgebogen ist.

## Claims

1. Structural member (1, 16), in particular for bodies of motor vehicles, comprising an outer shell (2, 3, 17, 18) bounding an internal space (4) and comprising a structural component (5, 20) arranged in the internal space (4), extending substantially in the longitudinal direction, a hollow space being formed between the inner wall of the outer shell (2, 3, 17, 18) and the structural component (5, 20) which is at least partially filled with an expanded structural foam (13, 25), **characterized in that** the structural component (5, 20, 26, 31) formed from at least one profiled metal sheet (6, 7, 20, 27, 28, 32) comprises at least partially overlapping sheet metal surfaces (8, 21) which are not joined by structural joints.

2. Structural member according to Claim 1, **characterized in that** the structural component (20, 31) consists of a profiled metal sheet (32), the profiled metal sheet being formed in the region of the overlapping portion (21) as a hollow profile.

3. Structural member according to Claim 1, **characterized in that** the structural component (1, 26) is formed by at least two profiled metal sheets (6, 7, 27, 28) which comprise at least one partially overlapping portion (8) in the longitudinal direction.

4. Structural member according to one of the preceding claims, **characterized in that** the structural component is formed by at least two profiled metal sheets which comprise at least one partially overlapping portion in cross section.

5. Structural member according to one of the preceding claims, **characterized in that** at least one profiled metal sheet (27, 32) comprises at least one tab (30, 36) which holds the structural component (26, 31) in shape during the assembly of a structural member.

6. Structural member according to Claim 5, **characterized in that** at least one tab (30, 36) is guided through a slot (29, 25) of a profiled metal sheet (27, 32).

7. Structural member according to Claim 5 or 6, **characterized in that** at least one tab (30, 36) is bent back.

## Revendications

1. Poutre profilée (1, 16), en particulier pour des carrosseries de véhicules automobiles, avec une coque extérieure (2, 3, 17, 18) délimitant un espace intérieur (4), et avec un composant structurel (5, 20) s'étendant essentiellement en direction longitudinale, disposé dans l'espace intérieur (4), dans laquelle un espace creux est formé entre la paroi intérieure de la coque extérieure (2, 3, 17, 18) et le composant structurel (5, 20), qui est rempli au moins partiellement d'une mousse structurelle expansée (13, 25), **caractérisée en ce que** le composant structurel (5, 20, 26, 31) formé d'au moins une tôle profilée (6, 7, 20, 27, 28, 32) présente des surfaces de tôle (8, 21) se chevauchant au moins localement, qui ne sont pas assemblées par des joints structurels.

2. Poutre profilée selon la revendication 1, **caractérisée en ce que** le composant structurel (20, 31) est constitué d'une tôle profilée (32), dans laquelle la tôle profilée a une forme de profilé creux dans la région du chevauchement (21).

3. Poutre profilée selon la revendication 1, **caractérisée en ce que** le composant structurel (1, 26) est formé par au moins deux tôles profilées (6, 7, 27, 28), qui présentent au moins un chevauchement local (8) en direction longitudinale.

4. Poutre profilée selon l'une quelconque des revendications précédentes, **caractérisée en ce que** le composant structurel est formé par au moins deux tôles profilées, qui présentent au moins un chevauchement local en section transversale.

5. Poutre profilée selon l'une quelconque des revendications précédentes, **caractérisée en ce qu'**au moins une tôle profilée (27, 32) comporte au moins une patte (30, 36), qui maintient le composant structurel (26, 31) en forme pendant le montage d'une poutre profilée.

6. Poutre profilée selon la revendication 5, **caractérisée en ce qu'**au moins une patte (30, 36) est guidée à travers une fente (29, 25) d'une tôle profilée (27, 32).

7. Poutre profilée selon la revendication 5 ou 6, **caractérisée en ce qu'**au moins une patte (30, 36) est recourbée.
